# FASCICULE DE BREVET EUROPEEN

(11) **EP 1 157 923 B1**
(45) Date de publication et mention de la délivrance du brevet: **20.12.2006**
(21) Numéro de dépôt: 01401298.3
(22) Date de dépôt: 18.05.2001
(51) Int. Cl.: B64C 13/42, B64C 13/28

(54) **Dispositif d'actionnement, notamment pour commande de vol d'aéronef**
Stellantrieb, insbesondere für Flugzeuge
Actuator, in particular for aircraft

(30) Priorité: 22.05.2000 FR 0006550
(43) Date de publication de la demande: 28.11.2001
(73) Titulaire: Goodrich Actuation Systems SAS, 78530 Buc (FR)
(72) Inventeur: Rodrigues, Fernand, 95230 Soisy Sous Montmorency (FR)
(74) Mandataire: Callon de Lamarck, Jean-Robert

(56) Documents cités:
- WO-A-91/05698
- FR-A- 2 562 028
- US-A- 4 533 097

## Description

La présente invention est relative à un dispositif d'actionnement, notamment pour commande de vol d'aéronef.

Elle trouve en particulier avantageusement application pour actionner un élément de réglage de plan horizontal sur un avion (gouverne de profondeur) d'autres applications étant néanmoins possibles

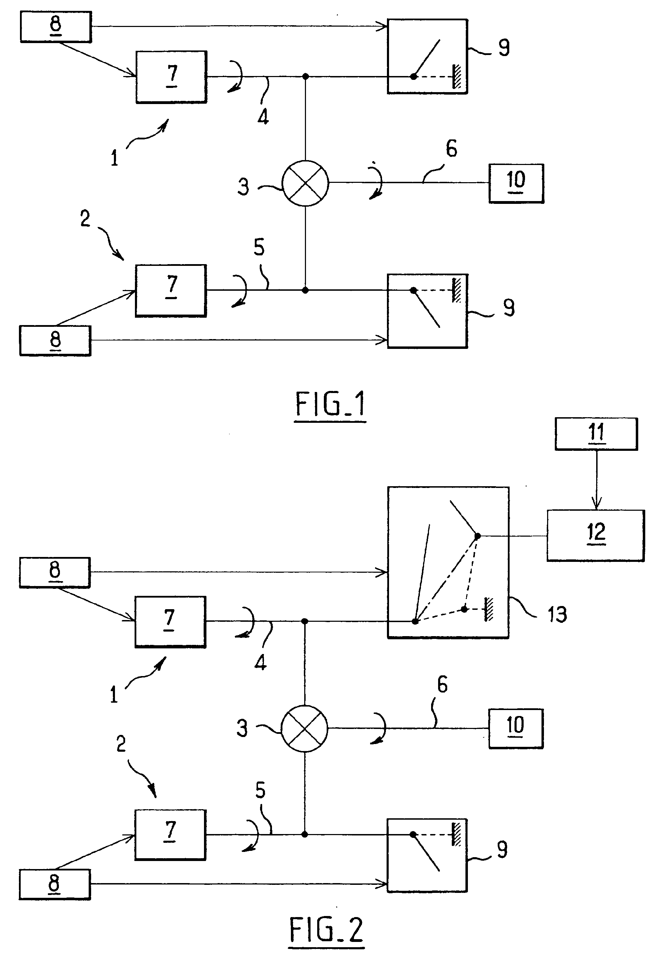

Les gouvernes de profondeur de certains avions sont actionnées ainsi que l'illustre la figure 1 au moyen de deux chaînes d'entraînement principales 1 2 et d'un différentiel 3 qui relie des arbres 4 5 en sortie de ces deux chaînes à un arbre de commande 6 relié a une gouverne de profondeur 10

Généralement ces deux chaînes 1 2 sont des chaînes hydrauliques. Elles comportent chacune un moteur hydraulique 7 actionné par une source hydraulique 8 ainsi que des moyens 9 formant frein qui permettent de bloquer l'arbre dudit moteur 7 lorsque la pression hydraulique de la chaîne correspondante baisse de façon à alors définir un point d'appui pour le différentiel 3 et permettre à la deuxième chaîne hydraulique d'entraîner seule le différentiel 3 et l'arbre de commande 6 relié a la gouverne de profondeur 10

On connaît également par la demande de brevet français FR 2 562 028, qui montre toutes les caractéristiques du préambule de la revendication indépendante 1, un dispositif d'actionnement, destiné à la commande d'une surface aérodynamique horizontale à incidence variable d'un aéronef, comportant deux chaînes d'entraînement principales et un différentiel qui relie les arbres en sortie de ces deux chaînes à un arbre de commande relié à la surface aérodynamique à actionner. Ce dispositif comporte également des moyens pour bloquer les arbres en sortie de ces chaînes d'entraînement dans le cas où la chaîne qui les entraîne ne fonctionne pas.

On souhaite pouvoir sécuriser encore davantage les dispositifs d'actionnement, afin de minimiser les risques de pannes

L'invention a pour buts de proposer une solution en ce sens qui soit simple et particulièrement fiable

Elle propose à cet effet un dispositif d'actionnement notamment pour commande de vol d'aéronef, comportant au moins deux chaînes d'entraînement principales et un différentiel qui relie des arbres en sortie de ces deux chaînes à un arbre de commande relié a un élément à actionner et comportant également des moyens pour bloquer les arbres en sortie de ces chaînes d'entraînement dans le cas où la chaîne qui les entraîne ne fonctionne pas, caractérisé en ce qu'il comporte au moins un moteur d'entraînement auxiliaire et un mécanisme d'embrayage qui est monté sur l'arbre de sortie de l'une des chaînes principales et qui est apte à assurer automatiquement l'entraînement de cet arbre de sortie par le moteur d'entraînement auxiliaire lorsque sa chaîne d'entraînement principale ne fonctionne pas et à bloquer automatiquement ledit arbre de sortie lorsque ladite chaîne d'entraînement principale et ledit moteur d'entraînement auxiliaire ne fonctionnent pas.

Dans une variante particulièrement avantageuse, le mécanisme d'embrayage comporte :
- un rotor intermédiaire monté rotatif sur l'arbre de sortie ;
- des premiers moyens de friction interposés entre ledit rotor intermédiaire et une portion solidaire de l'arbre de sortie, ces premiers moyens de friction reliant solidairement ledit rotor intermédiaire et ledit arbre de sortie lorsqu'ils sont en prise ;
- des seconds moyens de friction interposés entre ledit rotor intermédiaire et un carter du mécanisme, ces seconds moyens de friction reliant solidairement ledit rotor intermédiaire et le carter lorsqu'ils sont en prise ;
- des moyens ressorts aptes à exercer sur une portion solidaire de l'arbre de sortie un effort tendant d'une part à mettre en prise ces premiers moyens de friction et d'autre part, lorsque ceux-ci sont en prise, à exercer sur le rotor intermédiaire un effort axial tendant à mettre en prise les seconds moyens de friction ;
- des moyens qui lorsque la chaîne principale de l'arbre de sortie est en fonctionnement, s'opposent à l'effort exercer par les moyens ressort ;
- une came et des moyens de roulement interposés entre ce rotor intermédiaire et un rotor qui est monté rotatif sur l'arbre de sortie et qui est entraîné par le moteur auxiliaire, cette came et ces moyens de roulement étant tels que lorsque le moteur auxiliaire est en fonctionnement et que la chaîne principale ne l'est pas, ils repoussent axialement le rotor intermédiaire dans une position où les seconds moyens de friction ne sont plus en prise et où ils entraînent ledit rotor intermédiaire.

On notera qu'une telle structure permet le débrayage automatique du moteur auxiliaire dès que ce moteur ne tourne plus ou que la chaîne principale sur laquelle il est monté est en fonctionnement.

Elle permet de bloquer et l'arbre de sortie de ladite chaîne principale et la sortie du moteur auxiliaire lorsque ni ledit moteur auxiliaire, ni ladite chaîne principale ne fonctionnent.

L'invention trouve en particulier avantageusement application dans le cas où les chaînes d'entraînement principales sont de type hydrauliques et où le moteur d'entraînement auxiliaire est de type électrique.

De préférence alors, les moyens qui, lorsque la chaîne principale de l'arbre de sortie est en fonctionnement, s'opposent à l'effort exercer par les moyens ressort sont de type à piston hydraulique, l'effort exercé par ledit piston étant fonction de la pression dans ladite chaîne principale.

Dans d'autres variantes de réalisation, ces moyens peuvent être de type à solénoïde.

D'autres caractéristiques et avantages de l'invention ressortiront encore de la description qui suit, laquelle est purement illustrative et non limitative et doit être lue en regard des dessins annexés sur lesquels :
- la figure 1, déjà discutée, est une représentation schématique d'un mécanisme d'actionnement conforme à un mode de réalisation connu ;
- la figure 2 est une représentation schématique d'un mécanisme d'actionnement conforme à un mode de réalisation possible pour l'invention ;
- les figures 3 et 4 sont respectivement une représentation schématique et une représentation en vue en coupe illustrant un mode de réalisation possible pour l'ensemble 13 du mécanisme illustré sur la figure 2 ;
- les figures 5a à 5c sont des représentations schématiques illustrant trois états possibles pour cet ensemble 13.

Le mécanisme conforme à un mode de réalisation possible de l'invention qui est illustré sur la figure 2 est similaire à celui de la figure 1, mais comporte à la place des moyens 9 formant frein de la chaîne 1 un ensemble 13 permettant à un moteur électrique 12 alimenté par une source 11 d'entraîner l'arbre 4 si le moteur hydraulique 7 de la chaîne 1 défaille.

Plus particulièrement, cet ensemble 13 assure le fonctionnement suivant :
- lorsque ledit moteur hydraulique 7 défaille et que le moteur électrique 12 est en fonctionnement, l'arbre 4 est entraîné par ce moteur électrique 12 (état de fonctionnement schématisé par les traits mixtes dans le bloc qui sur la figure 2 définit l'ensemble 13) ;
- lorsque ledit moteur hydraulique 7 défaille et que le moteur électrique 12 ne fonctionne pas, l'arbre 4 et l'arbre du moteur électrique 12 sont bloqués, constituant ainsi un point d'appui pour le différentiel 3 (état de fonctionnement schématisé par les traits pointillés dans le bloc de l'ensemble 13);
- lorsque le moteur hydraulique 7 est en fonctionnement, l'arbre 4 et l'arbre du moteur électrique 12 sont libres en rotation, tant vis à vis du carter dans lequel ils se trouvent que l'un par rapport à l'autre (état de fonctionnement schématisé par les traits pleins sur la figure 2 dans le bloc de l'ensemble 13).

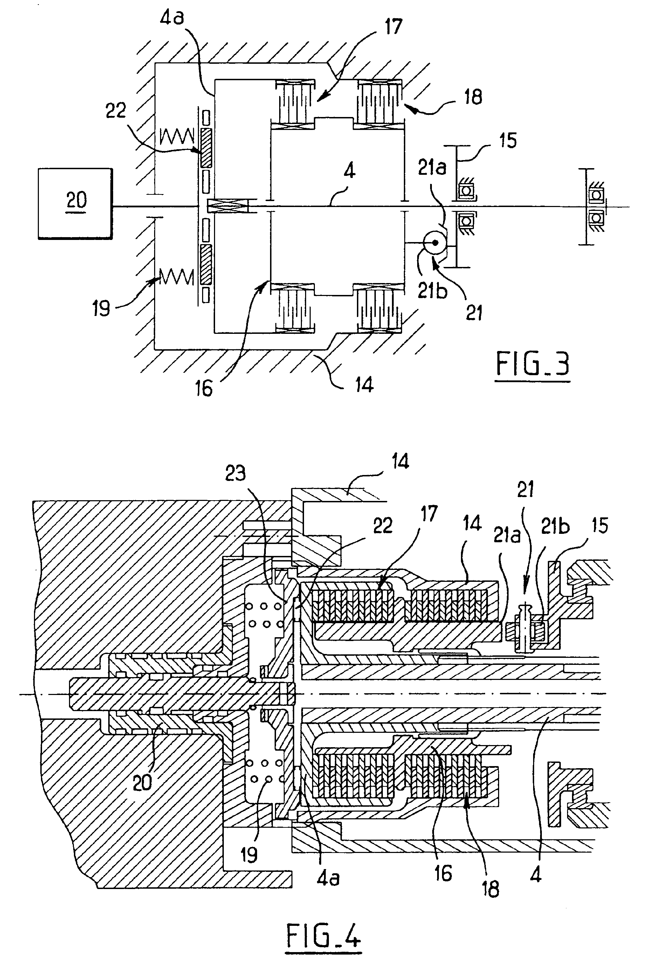

Une structure possible pour l'ensemble 13 va maintenant être décrite en référence aux figures 3 et 4.

Cette structure comporte :
- un carter 14 ;
- l'arbre 4 de la chaîne 1 qui est monté rotatif dans ledit carter 14 ;
- un rotor 15 monté rotatif sur l'arbre 4 et entraîné par le moteur électrique 12;
- un rotor 16 intermédiaire, également monté rotatif sur l'arbre 4 ;
- un premier jeu 17 de disques de friction interposé entre le rotor 16 et un flasque 4a en retour solidaire de l'arbre 4 ;
- un second jeu 18 de disques de friction interposé entre le rotor 16 et le carter 14 ;
- des moyens 19 formant ressort aptes à exercer sur le flasque 4a, par l'intermédiaire d'un flasque 23 sur lequel lesdits moyens ressort viennent en appui et d'aiguilles de roulement 22 interposées entre ce flasque 23 et le flasque 4a, un effort tendant d'une part à mettre en prise les disques du jeu 17 et d'autre part, lorsque les disques du jeu 17 sont en prise, à exercer sur le rotor 16, par l'intermédiaire du flasque 4a et du jeu de disques 17, un effort tendant à mettre en prise les disques du jeu 18 ;
- des moyens 20 qui lorsque le moteur 7 de la chaîne 1 est en fonctionnement, s'opposent à l'effort exercer sur le flasque 4a par les moyens ressort 19 ; ces moyens sont avantageusement de type à piston hydraulique, notamment dans le cas où le moteur 7 de la chaîne 1 est lui-même hydraulique ; en variante, notamment dans le cas où le moteur 7 précité est de type électrique, les moyens 20 peuvent être de type à solénoïde ;
- des moyens 21 comportant une came 21a et des moyens de roulement complémentaires 21b, qui sont interposés entre le rotor 16 et le rotor 15 et qui, lorsque le moteur 12 entraîne le rotor 15, alors que le rotor 16 est bloqué par rapport au carter 14 par le jeu de disques de friction 18, tendent à repousser axialement le rotor 16 dans une position où les disques de friction du jeu 18 ne sont plus en prise.

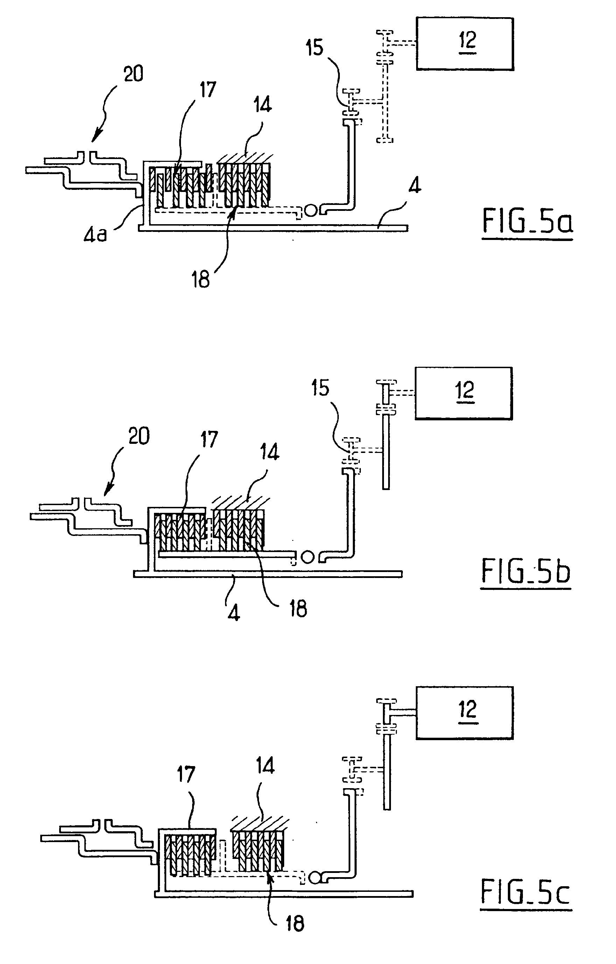

Ainsi que l'illustrent les figures 5a à 5c, une telle structure présente trois états de fonctionnement.

Dans le premier de ces états (figure 5a), lorsque le moteur 7 de la chaîne 1 fonctionne normalement, l'effort exercé par les moyens 20 sur le flasque 4a équilibre l'effort exercé par les moyens ressort 19. Dans cette configuration, les deux jeux de disques de friction 17 et 18 sont desserrés. Le moteur électrique 12 est donc débrayé par rapport à l'arbre 4. C'est le moteur hydraulique 7 de la chaîne 1 qui entraîne ledit arbre 4.

Dans une deuxième configuration (figure 5b), où le moteur 7 de la chaîne 1 ne fonctionne plus, la pression dans son circuit hydraulique étant par exemple trop basse et où le moteur électrique 12 n'est pas en marche, les moyens ressort 19 exercent sur le flasque 4a un effort qui maintient les disques de friction des jeux 17 et 18 en prise. Le rotor 15 relié au moteur électrique 12 et l'arbre 4 du moteur 7 de la chaîne 1 sont alors tous deux bloqués par rapport au carter 14.

Dans une troisième configuration (figure 5c), le moteur 7 de la chaîne 1 ne fonctionne plus, mais le moteur électrique 12 est en marche. Lorsque les moyens 20 cessent d'équilibrer les moyens ressort 19, ces derniers repoussent le flasque 4a, de sorte que les disques de friction du jeu 17, puis ceux du jeu 18, viennent en prise tendant ainsi à bloquer l'arbre 4 et le rotor 16.

Le rotor 15 entraîné par le moteur 12 tourne par rapport au rotor 16, la came 21a et les moyens complémentaires 21b repoussant axialement le rotor intermédiaire 16, ce qui a pour effet de désengager les disques du jeu 18 tout en maintenant en prise ceux du jeu 17.

L'arbre 4, solidaire du rotor 16 est libre de tourner par rapport au carter 14 et est alors entraîné par le rotor 15 et le moteur 12, la came 21a et les moyens de roulement 21b permettant d'exercer un couple de rotation sur le rotor intermédiaire 16.

Ainsi, le mécanisme illustré sur la figure 2 présente quatre modes de fonctionnement.

Dans un premier mode, les deux chaînes principales 1 et 2 fonctionnent. Elles entraînent ensemble l'arbre 6 et la charge à laquelle il est relié par l'intermédiaire du différentiel 3. Le moteur de secours 12 est alors débrayé par rapport à l'arbre 4 et n'est pas mis en route.

Dans un deuxième mode, la chaîne principale 1 fonctionne, mais la chaîne 2 ne fonctionne plus. Les moyens 9 formant frein sur la chaîne 2 bloquent l'arbre 5. La chaîne 1 entraîne seule l'arbre 6 et la charge. Le moteur de secours 12 est toujours débrayé par rapport à l'arbre 4 et n'est pas mis en route.

Dans un troisième mode, la chaîne principale 1 ne fonctionne plus, tandis que la chaîne 2 fonctionne. Le moteur de secours 12 n'est toujours pas mis en route. Son rotor de sortie et l'arbre 4 du moteur 7 de la chaîne 1 sont alors bloqués par rapport au carter 14. C'est la chaîne 2 qui par l'intermédiaire du différentiel 3 commande le mouvement de la charge.

Dans un quatrième mode, les deux chaînes 1 et 2 ne fonctionnent plus. Le moteur électrique de secours 12 est mis en route et entraîne l'arbre 4 de la chaîne 1, tandis que les moyens 9 formant frein sur la chaîne 2 bloquent l'arbre 5. C'est le moteur 12 qui entraîne la charge par l'intermédiaire du différentiel 3.

Le dispositif qui vient d'être décrit est particulièrement avantageux pour actionner un élément de réglage de plan horizontal sur un avion.

## Revendications

1. Dispositif d'actionnement, notamment pour commande de vol d'aéronef, comportant au moins deux chaînes d'entraînement principales (1, 2) et un différentiel (3) qui relie des arbres (4, 5) en sortie de ces deux chaînes à un arbre de commande (6) relié à un élément à actionner (10) et comportant également des moyens (9, 13) pour bloquer les arbres (4, 5) en sortie de ces chaînes d'entraînement dans le cas où la chaîne (1, 2) qui les entraîne ne fonctionne pas, **caractérisé en ce qu'**il comporte au moins un moteur d'entraînement auxiliaire (12) et un mécanisme d'embrayage (13) qui est monté sur l'arbre de sortie (4) de l'une (1) des chaînes principales et qui est apte à assurer automatiquement l'entraînement de cet arbre de sortie (4) par le moteur d'entraînement auxiliaire (12) lorsque sa chaîne d'entraînement principale (1) ne fonctionne pas et à bloquer automatiquement ledit arbre de sortie (4) lorsque ladite chaîne d'entraînement principale (1) et ledit moteur d'entraînement auxiliaire (12) ne fonctionnent pas.

2. Dispositif selon la revendication 1, **caractérisé en ce que** le mécanisme d'embrayage comporte :
- un rotor intermédiaire (16) monté rotatif sur l'arbre de sortie (4),
- des premiers moyens de friction (17) interposés entre ledit rotor intermédiaire (16) et une portion (4a) solidaire de l'arbre de sortie (4), ces premiers moyens de friction (17) reliant solidairement ledit rotor intermédiaire (16) et ledit arbre de sortie (4) lorsqu'ils sont en prise,
- des seconds moyens de friction (18) interposés entre ledit rotor intermédiaire (16) et un carter (14) du mécanisme, ces seconds moyens de friction (18) reliant solidairement ledit rotor intermédiaire (16) et le carter (14) lorsqu'ils sont en prise,
- des moyens ressorts (19) aptes à exercer sur une portion (4a) solidaire de l'arbre de sortie (4) un effort tendant d'une part à mettre en prise les premiers moyens de friction (17) et d'autre part, lorsque ceux-ci sont en prise, à exercer sur le rotor intermédiaire (16) un effort axial tendant à mettre en prise les seconds moyens de friction (18) ;
- des moyens (20) qui lorsque la chaîne principale de l'arbre de sortie est en fonctionnement, s'opposent à l'effort exercer par les moyens ressort (19) ;
- une came (21 a) et des moyens de roulement (21 b) interposés entre ce rotor intermédiaire (16) et un rotor (15) qui est monté rotatif sur l'arbre de sortie (4) et qui est entraîné par le moteur auxiliaire (12), cette came et ces moyens de roulement étant tels que lorsque le moteur auxiliaire (12) est en fonctionnement et que la chaîne principale (1) ne l'est pas, ils repoussent axialement le rotor intermédiaire dans une position où les seconds moyens de friction ne sont plus en prise et où ils entraînent ledit rotor intermédiaire.

3. Dispositif selon l'une des revendications 1 ou 2, **caractérisé en ce que** les chaînes d'entraînement principales (1, 2) sont de type hydrauliques, le moteur d'entraînement auxiliaire (12) étant de type électrique.

4. Dispositif selon les revendications 2 et 3, **caractérisé en ce que** les moyens (20) qui, lorsque la chaîne principale (1) de l'arbre de sortie (4) est en fonctionnement, s'opposent à l'effort exercer par les moyens ressort sont de type à piston hydraulique, l'effort exercé par ledit piston étant fonction de la pression dans ladite chaîne principale (1).

5. Dispositif selon la revendication 2, **caractérisé en ce que** les moyens qui, lorsque la chaîne principale de l'arbre de sortie est en fonctionnement, s'opposent à l'effort exercé par les moyens ressort sont de type à solénoïde.

6. Dispositif selon la revendication 2, **caractérisé en ce que** les premiers et/ou les seconds moyens de friction (17, 18) sont de type à jeux de disques.

7. Dispositif pour actionner un élément de réglage de plan horizontal sur un avion, **caractérisé en ce qu'**il est constitué par un dispositif selon l'une des revendications précédentes.

## Claims

1. Actuator apparatus, in particular for an airplane flight control, the device comprising at least two main drive systems (1, 2) and a differential (3) which connects outlet shafts (4, 5) from the two systems to a control shaft (6) connected to an element (10) to be actuated and also including means (9, 13) for locking each outlet shaft (4, 5) of the drive systems when the system (1, 2) for driving it is no longer operating; the apparatus being **characterized in that** it includes at least one auxiliary drive motor (12) and a clutch mechanism (13) mounted on the outlet shaft (4) of one of the main systems (1) and suitable for automatically driving said outlet shaft (4) by means of the auxiliary motor (12) when the corresponding main drive system (1) is not operating and for automatically locking said outlet shaft (4) when said main drive system (1) and said auxiliary motor (12) are not operating.

2. Apparatus according to claim 1, **characterized in that** the clutch mechanism comprises:
· an intermediate rotor (16) mounted to rotate on the outlet shaft (4);
· first friction means (17) interposed between said intermediate rotor (16) and a portion (4a) secured to the outlet shaft (4), said first friction means (17), when in engagement, uniting said intermediate rotor (16) and said outlet shaft (4);
· second friction means (18) interposed between said intermediate rotor (16) and a casing (14) of the mechanism, said second friction means (18), when in engagement, uniting said intermediate rotor (16) and said casing (14);
· spring means (19) suitable for exerting a force on a portion (4a) secured to the outlet shaft (4), said force tending firstly to put the first friction means (17) into engagement and secondly, when said means are in engagement, to exert an axial force on the intermediate rotor (16) tending to put the second friction means (18) into engagement;
. means (20) which oppose the force exerted by the spring means (19) so long as the main drive system for the outlet shaft is in operation; and
. a cam (21a) and cam follower means (21b) interposed between said intermediate rotor (16) and a rotor (15) which is mounted to rotate on the outlet shaft (4) and which is driven by the auxiliary motor (12), said cam and said cam follower means being such that when the auxiliary motor (12) is in operation while the main drive system (1) is not in operation, they push the intermediate rotor axially back into a position where the second friction means are no longer in engagement and in which said intermediate rotor is driven.

3. Apparatus according to claim 1 or claim 2, **characterized in that** the main drive systems (1, 2) are of the hydraulic type and the auxiliary drive motor (12) is of the electrical type.

4. Apparatus according to claims 2 and 3, **characterized in that** the means (20) which oppose the force exerted by the spring means so long as the main drive system (1) of the outlet shaft (4) is in operation, are of the hydraulic piston type with the force exerted by said piston being a function of the pressure in said main drive system (1).

5. Apparatus according to claim 2, **characterized in that** the means which oppose the force exerted by the spring means so long as the main drive system of the outlet shaft is in operation are of the solenoid type.

6. Apparatus according to claim 2, **characterized in that** the first and/or second friction means (17, 18) are of the type comprising a set of disks.

7. Apparatus for actuating an element for adjusting the tail plane of an airplane, the apparatus being **characterized in that** it is constituted by an apparatus according to any preceding claim.

## Patentansprüche

1. Stellantrieb, besonders zur Steuerung des Fluges eines Luftfahrzeuges, der mindestens zwei Hauptantriebsstränge (1, 2) und ein Differential (3) umfaßt, das die Wellen (4, 5) am Ausgang dieser beiden Stränge mit einer Steuerwelle (6) verbindet, die mit einem Stellelement (10) verbunden ist, und der auch Mittel (9, 13) zum Blockieren der Wellen (4, 5) am Ausgang dieser Antriebsstränge für den Fall umfaßt, in dem der Strang (1, 2), die sie antreibt, nicht funktioniert, **dadurch gekennzeichnet, daß** er mindestens einen Hilfsantriebsmotor (12) und einen Kupplungsmechanismus (13) umfaßt, der auf der Ausgangswelle (4) des einen (1) der Hauptstränge montiert ist und der dazu geeignet ist, automatisch den Antrieb dieser Ausgangswelle (4) durch den Hilfsantriebsmotor (12) sicherzustellen, wenn sein Hauptantriebsstrang (1) nicht funktioniert, und automatisch die genannte Ausgangswelle (4) zu blockieren, wenn der genannte Hauptantriebsstrang (1) und der genannte Hilfsantriebsmotor (12) nicht funktionieren.

2. Vorrichtung nach Anspruch 1, **dadurch gekennzeichnet, daß** der Kupplungsmechanismus umfaßt:
- einen Zwischenrotor (16), der drehbar auf der Ausgangswelle (4) montiert ist,
- erste Reibungsmittel (17), die zwischen dem genannten Zwischenrotor (16) und einem Abschnitt (4a) angeordnet sind, der fest mit der Ausgangswelle (4) verbunden ist, wobei diese ersten Reibungsmittel (17) den genannten Zwischenrotor (16) und die genannte Ausgangswelle (4) fest miteinander verbinden, wenn sie in Eingriff stehen,
- zweite Reibungsmittel (18), die zwischen dem genannten Zwischenrotor (16) und einem Gehäuse (14) des Mechanismus angeordnet sind, wobei diese zweiten Reibungsmittel (18) den genannten Zwischenrotor (16) und das Gehäuse (14) fest miteinander verbinden, wenn sie in Eingriff stehen,
- Federmittel (19), die geeignet sind, auf einen mit der Ausgangswelle (4) festen Abschnitt (4a) eine Kraft auszuüben, die einerseits den Eingriff der ersten Reibungsmittel (17) und andererseits, wenn diese in Eingriff stehen, das Ausüben einer Axialkraft auf den Zwischenrotor (16) anstrebt, die danach strebt, die zweiten Reibungsmittel (18) in Eingriff zu bringen;
- Mittel (20), die dann, wenn sich der Hauptstrang der Ausgangswelle in Funktion befindet, sich der Kraft entgegensetzen, die durch die Federmittel (19) ausgeübt wird; und
- einen Nocken (21a) und Wälzmittel (21b), die zwischen diesem Zwischenrotor (16) und einem Rotor (15) angeordnet sind, der drehbar auf der Ausgangswelle (4) angebracht ist und der durch den Hilfsmotor (12) angetrieben wird, wobei dieser Nocken und diese Wälzmittel derart sind, daß sie, wenn der Hilfsmotor (12) in Funktion steht und wenn der Hauptstrang (1) dies nicht ist, den Zwischenrotor axial in eine Position zurückschieben, in der die zweiten Reibungsmittel nicht mehr in Eingriff stehen und in der sie den genannten Zwischenrotor antreiben.

3. Vorrichtung nach einem der Ansprüche 1 oder 2, **dadurch gekennzeichnet, daß** die Hauptantriebsstränge (1, 2) hydraulischer Art sind und der Hilfsantriebsmotor (12) elektrischer Art ist.

4. Vorrichtung nach den Ansprüchen 2 und 3, **dadurch gekennzeichnet, daß** die Mittel (20), die, wenn sich der Hauptstrang (1) der Ausgangswelle (4) in Funktion befindet, sich der Kraft entgegensetzen, die durch die Federmittel ausgeübt wird, von der Art eines hydraulischen Kolbens sind, und daß die Kraft, die durch den genannten Kolben ausgeübt wird, eine Funktion des Druckes in dem genannten Hauptstrang (1) ist.

5. Vorrichtung nach Anspruch 2, **dadurch gekennzeichnet, daß** die Mittel, die, wenn sich der Hauptstrang der Ausgangswelle in Funktion befindet, sich der Kraft entgegensetzen, die durch die Federmittel ausgeübt wird, von der Art eines Elektromagnets sind.

6. Vorrichtung nach Anspruch 2, **dadurch gekennzeichnet, daß** die ersten und/oder die zweiten Reibungsmittel (17, 18) von der Art von Scheibensätzen sind.

7. Vorrichtung zum Betätigen eines Elements zum Regulieren der Horizontalebene in einem Flugzeug, **dadurch gekennzeichnet, daß** sie von einer Vorrichtung nach einem der vorhergehenden Ansprüche gebildet wird.
